## Europäisches Patentamt
## European Patent Office
## Office européen des brevets

(11) Veröffentlichungsnummer : **0 150 390**
**B1**

(12) **EUROPÄISCHE PATENTSCHRIFT**

(45) Veröffentlichungstag der Patentschrift :
02.12.87

(51) Int. Cl.⁴ : **C 10 J   3/50**

(21) Anmeldenummer : **84115328.1**

(22) Anmeldetag : **15.09.82**

(60) Veröffentlichungsnummer der früheren Anmeldung
nach Art. 76 EPÜ : **0074669**

(54) **Vorrichtung zur Dosierung von festen, gekörnten insbesondere Brennstoffen, z. B. in einen Wirbelschichtreaktor.**

(30) Priorität : **16.09.81 DE 3136645**

(43) Veröffentlichungstag der Anmeldung :
**07.08.85 Patentblatt 85/32**

(45) Bekanntmachung des Hinweises auf die Patenterteilung : **02.12.87 Patentblatt 87/49**

(84) Benannte Vertragsstaaten :
**BE DE GB IT NL SE**

(56) Entgegenhaltungen :
DE-A- 2 714 355
FR-A- 2 333 852

(73) Patentinhaber : **Bergwerksverband GmbH**
**Franz-Fischer-Weg 61**
**D-4300 Essen 13 (DE)**

(72) Erfinder : **Werner, Peters, Prof. Dr.**
**Langacker 5**
**D-4630 Bochum 6 (DE)**
Erfinder : **Jüntgen, Harald, Prof. Dr.**
**Bonscheidtstrasse 79**
**D-4300 Essen 15 (DE)**
Erfinder : **van Heek, Karl Heinrich, Dr.**
**Fährenkotten 3**
**D-4300 Essen 15 (DE)**
Erfinder : **Kirchhoff, Reinhold, Dr.**
**Hombergsring 56**
**D-4320 Hattingen (DE)**
Erfinder : **Wagener, Heinrich**
**Mettestrasse 9**
**D-4630 Bochum (DE)**

EP 0 150 390 B1

Jouve, 18, rue St-Denis, 75001 Paris, France

## Beschreibung

Die Erfindung betrifft eine Vorrichtung zur Dosierung von festen, gekörnten Brennstoffen, z. B. in einen Wirbelschichtreaktor, wobei ein Förderbunker für den Brennstoff mit einem Anschlußstutzen für Fördergas und einem Anschlußstutzen für den Brennstoff versehen ist und in einen oberen mit dem Anschlußstutzen für Brennstoff in Verbindung stehenden Siloraum sowie in einen unteren mit dem offenen Ende der Förderleitung in Verbindung stehenden Förderraum unterteilt ist, zwischen denen eine Schleuse angeordnet ist.

Die Wirbelschichttechnik wird bereits seit längerer Zeit im Bereich der Brennstoffnutzung angewendet ; hierbei kann der Brennstoff fest, flüssig oder gasförmig sein. Bei den in Frage kommenden Prozessen kann es sich u. a. um die Verbrennung, die Vergasung oder die Verflüssigung der Brennstoffe handeln. Bei solchen Verfahren wird im Wirbelschichtreaktor in der Regel eine Wirbelschicht aus einem inerten Material betrieben, wobei der zu verarbeitende Brennstoff möglichst kontinuierlich in den Reaktor eingespeist und Rückstände aus ihm ausgeschleust werden sollen. Hierfür hat sich die sogenannte Strahlaufgabe als eine geeignete Dosiertechnik erwiesen ; bei dieser wird der Brennstoff durch ein im Wirbelschichtreaktor endendes Strahlrohr mit einem hierfür geeigneten Fluid gefördert, während sogenanntes Mantelfluid ein das Strahlrohr umgebendes Mantelrohr durchströmt und etwa an der gleichen Stelle wie der Brennstoff durch eine Manteldüse in den Wirbelschichtreaktor eintritt. Das Mantelfluid kühlt das Strahlrohr und verhindert, daß der Brennstoff vor dem Eintritt in die Wirbelschicht bereits beginnt in unerwünschter Weise zu reagieren ; außerdem bewirkt das Mantelfluid eine gute Vermischung des Brennstoffes mit dem in der Wirbelschicht vorhandenen Wirbelgut.

Es hat sich herausgestellt, daß die vorbeschriebenen Strahlaufgabeeinrichtungen nur bedingt zu brauchbaren Ergebnissen führen, da vor allem bei zum Verbacken neigenden festen, gekörnten Brennstoffen, wie z. B. gewisse Kohlesorten, die Kühlung mit Mantelfluid derart intensiv sein muß, daß die Temperaturverteilung im Wirbelbett hiervon ungünstig beeinflußt wird ; anderenfalls besteht die latente Gefahr von Verstopfungen im Bereich der Dosiervorrichtung.

In der Europäischen Patentanmeldung EP-A-0 074 669 ist eine Vorrichtung beschrieben, die die vorbeschriebenen Nachteile vermeidet. Zur Dosierung des Brennstoffes wird gemäß EP-A-0 074 669 in die Förderleitung für den Brennstoff eine verzweigte Leitung für das gasförmige Förderfluid eingeführt, die je einen Zweig in Förder- bzw. Gegenrichtung (Steuerdreieck) aufweist. Während das vorerwähnte Steuerdreieck für eine getaktete Förderung des Brennstoffes, z. B. aus einem Förderbunker mit relativ wenig Fördergas und im Vergleich dazu einen hohen Brennstoffanteil (Dichtstromförderung) geeignet ist, und sicherstellt, daß bei relativ kleinen Wirbelschichtreaktoren die Wirbelschicht nicht lokal mit zu großen Brennstoffmengen beaufschlagt und dadurch gestört wird, ist es bei Wirbelschichtreaktoren mit größerem Brennstoffdurchsatz und/oder bei der Verwendung backender Brennstoffpartikel erforderlich, einen so großen Querschnitt für die Brennstofförderleitung vorzusehen, daß bei getakteter Fahrweise und Dichtstromförderung während des Fördertaktes kurzzeitig zu große Brennstoffmengen in die Wirbelschicht gelangen und diese stören.

DE-A-2 714 355 beschreibt eine gattungsgemäße Vorrichtung zur Dosierung pulveriger Brennstoffe. Diese Vorrichtung besteht aus einem Förderbunker, der einen konusförmigen Siloraum und ein Fördergefäß enthält. Zwischen dem Siloraum und dem Fördergefäß ist ein regulierbares Sperrorgan angeordnet. Im oberen Teil des Förderbunkers ist eine Schleuse für die Einführung der Brennstoffe eingerichtet. Im Fördergefäß ist ein Gaszufuhrrohr angeschlossen. Das Fördergas wird mit Brennstoffen im Fördergefäß gemischt und danach durch die am Fördergefäß angeschlossene Förderleitung bis zum Reaktor geführt. Auch bei dieser Vorrichtung ist eine Dichtstromförderung mit hohem Brennstoffanteil verwirklicht, wobei außerdem eine vergleichsweise komplizierte Förderstromregelung vorgesehen ist.

Der Erfindung liegt die Aufgabe zugrunde, eine Dosiervorrichtung zum Dosieren von festen, gekörnten Brennstoffen, z. B. in einen Wirbelschichtreaktor der eingangs genannten Gattung zu finden, die die vorgenannten Nachteile von Dichtstromförderungen vermeidet. Eine geeignete Fördertechnik zur Lösung dieser Aufgabe wird durch die kennzeichnenden Merkmale des Patentanspruchs 7 erreicht und mit dem Merkmal des Patentanspruchs 2 besonders vorteilhaft gestaltet. Es wird damit eine kontinuierliche Dünnstromförderung erzielt, bei der eine gleichmäßige kontinuierliche Beaufschlagung der Wirbelschicht mit relativ wenig Brennstoff und relativ viel Fördergas erfolgt.

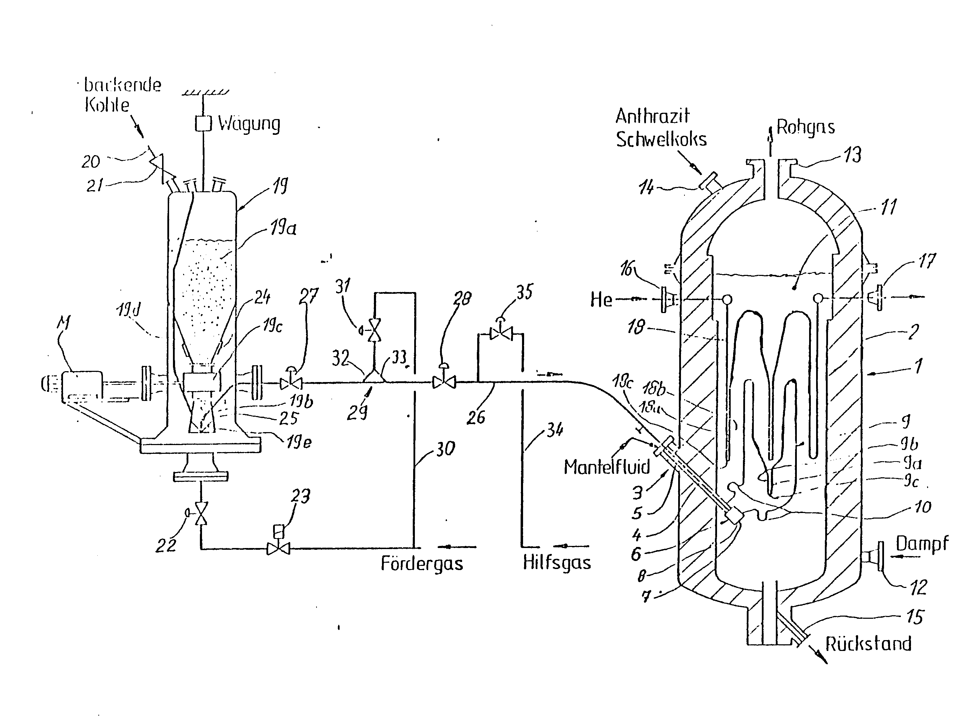

Weitere Ziele, Merkmale, Vorteile und Anwendungsmöglichkeiten der vorliegenden Erfindung ergeben sich aus der nachfolgenden Beschreibung eines Ausführungsbeispieles anhand der beiliegenden Zeichnung.

Die Figur der Zeichnung zeigt eine schematische Darstellung eines Wirbelschichtreaktors mit der erfindungsgemäßen Dosier-Teil im Schnitt.

In der Figur ist mit 1 ein Wirbelschichtreaktor gekennzeichnet, der eine gegebenenfalls auch isolierte Ummantelung 2 besitzt und z. B. für die Vergasung von Kohle geeignet ist. Die Aufgabe der Kohle erfolgt vorzugsweise in fester, gekörnter Form über die Dosiervorrichtung 3 mit Strahlrohr 4 für die Förderung der Kohle in den Reaktor und ein das Strahlrohr in seinem reaktorseitigen Endbereich konzentrisch umgebendes Mantelrohr 5 für Mantelfluid. Die den wesentlichen Gegenstand der Europäischen Patentanmeldung EP-A-0 074 669 bildende Dosiervorrichtung 3 weist innerhalb des Wirbelschichtreaktors 1 einen Düsenkopf 6 auf, aus dem der einzudosierende Brennstoff mit seinem Förderfluid durch eine Strahldüse 7 und das Mantelfluid durch ein Manteldüse 8 austritt. Das Mantelrohr 5 ist kurz vor dem Düsenkopf 6 mit der Manteldüse 8 im Strömungssinne unterbrochen, so daß allenfalls relativ geringe Mengen des Mantelfluids direkt in den Reaktor 1 gelangen können ; der Hauptstrom des Mantelfluids wird in Strömungsrichtung vor der Unterbrechungsstelle abgezweigt und durch einen im Wirbelschichtreaktor 1 aufgehängten mäanderförmigen Wärmetauscher 9 geleitet und dem Mantelrohr 5 z. B. im Bereich des Düsenkopfes 6 kurz vor der Manteldüse 8 wieder zugespeist. Lyrabögen 10 an den Enden des Wärmetauschers 9 gestatten im gewissen Umfang Positionsänderungen zwischen dem Düsenkopf und dem Wärmetauscher 9.

Innerhalb des Wirbelschichtreaktors 1 wird ein z. B. aus im wesentlichen inerten Material bestehendes Wirbelgut 11 über einen hier nicht dargestellten Anströmboden mit einem Wirbelfluid, z. B. Dampf im Wirbelzustand, gehalten. Das Wirbelfluid gelangt durch den Anschlußstutzen 12 in den Wirbelschichtreaktor 1 und verläßt diesen zusammen mit den Reaktionsgasen (Rohgas) über Auslaßstutzen 13. Außer dem durch die Dosiervorrichtung 3 eingespeisten Brennstoff kann weiterer Brennstoff — wie im Falle der Kohlevergasung Anthrazit und/oder Schwelkoks — über einen Anschlußstutzen 14 im Wirbelschichtreaktor 1 aufgegeben werden. Rückstandsprodukte aus der im Wirbelschichtreaktor 1 erfolgten Nutzung des Brennstoffes können z. B. im Bodenbereich des Wirbelschichtreaktors 1 über einen Auslaßstutzen 15 abgezogen werden. Das Wirbelgut 11 kann z. B. durch einen mit heißem Helium über die Anschlußstutzen 16 und 17 beaufschlagten Wärmetauscher 18 (Kühler) aufgeheizt werden.

Sowohl beim Wärmeaustauscher 18 als auch beim Wärmeaustauscher 9 können Hin- und Rücklaufrohre 9a und 9b bzw. 18a und 18b mit 180°-Umlenkung aufweisen.

Die Förderung des Brennstoffes aus festem, gekörntem Material erfolgt dadurch, daß ein Förderbunker 19 drucklos mit dem Brennstoff über einen Anschlußstutzen 20 befüllt wird und nach Schließen des Füllventils 21 der Förderbunker 19, z. B. über eine Leitung 22, auf Förderdruck gebracht wird, wobei ein Ventil die Druckregelung vornimmt. Zur Verwirklichung der Dünnstromförderung ist der Förderbunker 19 in einen oberen Siloraum 19a und einen unteren Förderraum 19b durch eine als Dosierelement wirkende Schleuse 19c, bevorzugt eine durch Motor M Drehzahl regulierbar angetriebene Zellenradschleuse unterteilt. Das Förderfluid gelangt über einen an geeigneter Stelle angeordneten Anschlußstutzen 22 in den Förderbunker 19 und von dort über Gasverteiler 24 in den unteren Bereich des Siloraumes 19a und durchspült diesen unter Auflockerung aufwärts, so daß der Eintrag in die Zellenradschleuse erleichtert wird. Oberhalb der Füllstandsgrenze sammelt sich dieses Gas in einem Dom, von dem aus es über eine Förderfluidleitung 19d möglichst steil nach unten in den Förderraum 19b gelangt der an seinem unteren Ende einen Trichter 19e mit einem muldenförmig geschlossenen unteren Ende zu Aufnahme des offenen Endes 25 der Förderleitung 26 aufweist. Durch den zwischen dem offenen Ende 25 und der Mulde im Trichter 19e verbleibenden Düsenspalt gelangt das Fördergas zusammen mit einer vorbestimmten, relativ kleinen Menge Brennstoff aufwärts in die Förderleitung 26. Es ist aber auch möglich, die Förderleitung 26-fallend — wie in der Zeichnung nicht näher dargestellt — an das nunmehr offene Ende des Trichters 19e anzuschließen und zusätzliche Förderluft nach unten in den Trichter einzublasen. Zum Schutz der Armatur 28 für die Absperrung des Brennstoffstromes (Armatur 27 ist als Notschlußarmatur immer geöffnet) ist vor dieser in die Förderleitung 26 ein Steuerdreieck 29 eingebaut, bei welchem über Leitung 30 mit mittels Ventil 31 geregeltem Fördergas die Leitungszweige 32, 33 beaufschlagt werden ; letztere münden etwa in entgegengesetzter bzw. gleicher Richtung zum Fördergasstrom in Förderleitung 26 und sorgen durch entsprechend gewählte Beaufschlagung mit Fördergas dafür, daß die Förderleitung bis zum völligen Öffnen oder Schließen der Absperrarmatur 28 frei von Feststoffpartikeln bleibt. — Natürlich kann durch ein solches Steuerdreieck in Verbindung mit den Ventilen 31 und 23 der Brennstoffstrom zu jeder beliebigen Zeit unterbrochen werden, wodurch z. B. ein getaktetes Eindosieren in den Wirbelschichtreaktor möglich wird.

Wenn die Brennstofförderung unterbrochen ist, kann über eine Leitung 34 mit Ventil 35 die Förderleitung 26 mit einem Hilfsgas beaufschlagt werden, um dadurch ein Eindringen von Wirbelgut aus dem Wirbelschichtreaktor 1 in die Förderleitung 26 zu verhindern.

Durch geeignete Einstellung der Ventile 23 und 31 kann die Brennstofförderung in weitem Umfang geregelt, aber auch schlagartig ab- und angestellt werden.

**Patentansprüche**

1. Vorrichtung zur Dosierung von festen, gekörnten Brennstoffen, z. B. in einen Wirbelschichtreaktor (1), wobei ein Förderbunker (19) für den Brennstoff mit einem Anschlußstutzen (22) für Fördergas und einem Anschlußstutzen (20) für den Brennstoff versehen ist und in einen oberen mit dem Anschlußstutzen (20) für Brennstoff in Verbindung stehenden Siloraum (19a) sowie in einen unteren mit dem offenen Ende (25) der Förderleitung (26) in Verbindung stehenden Förderraum (19b) unterteilt ist, zwischen denen eine Schleuse (19c) angeordnet ist, gekennzeichnet durch Gasverteiler (24) im unteren Austrittsbereich des Siloraumes (19a) sowie eine vom obersten Bereich des Siloraumes (19a) in den Förderraum (19b) führende Förderfluidleitung (19d).

2. Vorrichtung nach Anspruch 1, dadurch gekennzeichnet, daß das offene Ende (25) der Förderleitung (26) an der unteren Trichtermündung eines Trichters (19e) des Förderraumes (19b) mündet.

**Claims**

1. An apparatus for dosing solid, granular fuels, for example in a fluidized bed reactor (1), a supply bunker (19) for the fuel being provided with a connexion socket (22) for supplied gas and with a connexion socket (20) for the fuel and being divided into an upper silo space (19a) connected to the connexion socket (20) for the fuel and into a lower supply space (19b) connected to the open end (25) of the supply line (26), a sluice (19c) being disposed between the upper silo space (19a) and the supply space (19b), characterized by gas distributors (24) in the lower outlet region of the silo space (19a) and a supply fluid line (19d) leading from the uppermost region of the silo space (19a) into the supply space (19b).

2. An apparatus according to Claim 1, characterized in that the open end (25) of the supply line (26) opens at the lower funnel opening of a funnel (19e) of the supply space (19b).

**Revendications**

1. Installation de dosage de combustibles solides, en particulier granulaires, pour un réacteur à lit fluidisé (1), comprenant un silo à combustible (19) muni d'un ajutage (22) pour l'introduction de gaz d'entraînement et d'un ajutage (20) pour l'introduction du combustible, ledit silo (19) comportant une partie supérieure (19a), raccordée à l'ajutage (20) pour l'introduction du combustible, et une partie inférieure (19b), dans laquelle débouche l'extrémité ouverte (25) de la conduite d'acheminement (26), entre lesquelles est disposé un sas (19c), caractérisée en ce qu'elle comprend, dans la région de sortie inférieure de la partie supérieure (19a) du silo, des dispositifs de répartition du gaz (24), ainsi qu'un conduit (19d) pour le fluide d'entraînement, s'étendant de la région supérieure (19a) du silo jusque dans la partie inférieure (19b).

2. Installation suivant la revendication 1, caractérisée en ce que l'extrémité ouverte (25) de la conduite d'acheminement (26) débouche dans la partie inférieure d'une trémie (19e), disposée dans la partie inférieure (19b) du silo.

backende Kohle

Wägung

Anthrazit Schwelkoks

Rohgas

He

Mantelfluid

Fördergas

Hilfsgas

Dampf

Rückstand

0 150 390